# EUROPEAN PATENT SPECIFICATION

(11) **EP 4 478 811 B1**
(45) Date of publication and mention of the grant of the patent: **09.09.2026**
(21) Application number: 22927722.3
(22) Date of filing: 24.02.2022
(51) Int. Cl.: H04L 12/417

(54) **METHOD AND APPARATUS FOR SWITCHING GATE CONTROL LIST IN TIME-SENSITIVE NETWORKING**
VERFAHREN UND VORRICHTUNG ZUR UMSCHALTUNG EINER GATE-STEUERLISTE IN ZEITEMPFINDLICHER VERNETZUNG
PROCÉDÉ ET APPAREIL DE COMMUTATION DE LISTE DE COMMANDE DE GRILLE DANS UN RÉSEAUTAGE À TEMPS DE SENSIBILITÉ

(43) Date of publication of application: 18.12.2024
(73) Proprietor: Yinwang Intelligent Technologies Co., Ltd., Shenzhen, Guangdong 518110 (CN)
(72) Inventor: CAO, Yifan, Shenzhen, Guangdong 518129 (CN)
(74) Representative: Maiwald GmbH
(86) International application number: PCT/CN2022/077735
(87) International publication number: WO 2023/159433

(56) References cited:
- CN-A- 113 068 263
- CN-A- 113 645 149
- US-A1- 2020 267 094
- US-A1- 2020 389 405
- US-A1- 2021 044 365
- US-A1- 2021 274 585
- US-A1- 2022 030 641
- US-B1- 10 511 455

## Description

### TECHNICAL FIELD

This application relates to the field of communication technologies, and in particular, to a method and an apparatus for switching a gate control list in time-sensitive networking.

### BACKGROUND

With the development of communication technologies, there is an increasing requirement for a scenario (for example, factory automation control and automatic driving) in which objects are used as communication bodies. This type of communication (which may also be referred to as a time-sensitive service) has an extremely high data transmission latency control requirement. Therefore, time-sensitive networking (time-sensitive-networking, TSN) emerges. The TSN is a standard technology based on the standard Ethernet, provides deterministic information transmission, and provides reliable quality of service (quality of service, QoS) guarantee for the time-sensitive service.

The TSN is a protocol cluster including a series of protocol standards, and each protocol implements a different function. The IEEE 802.1Qbv standard defines time-aware scheduling (time-aware scheduled, TAS) to ensure that information is delivered at the specified time. A basic idea of time-aware scheduling is to use time division multiple access to divide Ethernet communication into fixed-length and repeated time slices, that is, periodic data transmission frames. The IEEE 802.1Qbv further introduces a scheduling mechanism of a gate control operation, to implement orderly scheduling of a data frame by a TSN device. A gate control list (gate control list, GCL) is configured on a port of each TSN device. The gate control list includes a gate state and a slot, and transmission of a data frame is scheduled based on gate states in different slots (that is, gate control of a data stream).

At present, the IEEE 802.1Qbv standard supports gate control operations on a plurality of ports, each port supports two gate control lists, each gate control list supports 128 gate control slots, and each gate control slot occupies 32 bits (bit). Therefore, the gate control lists occupy a large amount of storage space. This causes an increase in a chip area.

US 2022/0030641 A1 describes a method for implementing data transmission of a time

### SUMMARY

This application provides a method and an apparatus for switching a gate control list in time-sensitive networking, to help reduce resources occupied by gate control lists. The invention is defined in independent claims 1, 9, 14, and 15, and in dependent claims 2-8 and 10-13.

According to a first aspect, an embodiment of this application provides a method for switching a gate control list in time-sensitive networking. The method may be implemented by a time-sensitive networking (time-sensitive-networking, TSN) device. The TSN device may include but is not limited to a device such as a switch or a vehicle-mounted gateway chip that supports the IEEE 802.1Qbv standard protocol and the extended protocol. A specific product type or product form of the TSN device is not limited in this embodiment of this application.

Gate control slot storage space of the TSN device may include a first slot resource block and a second slot resource block, a quantity of slots in the first slot resource block is m times a quantity of slots in the second slot resource block, and m>1. The method may include:
obtaining a list switching command, where the list switching command indicates a target port of the TSN device to switch a running-state gate control list;
establishing a first gate control list of the target port based on an idle slot in the first slot resource block and/or an idle slot in the second slot resource block and the list switching command, where the first gate control list is in an idle state, and the first gate control list includes at least one slot; and
when a list switching condition is met, executing the list switching command to switch the running-state gate control list of the target port from a second gate control list to the first gate control list.

In the foregoing method, total storage space occupied by one gate control list of all ports of the TSN device is considered as a whole. By controlling an establishment manner and a switching manner of a gate control list of a port of the TSN device, the TSN device may configure gate control slot storage space for gate control operations on all ports in a 1+1/m manner according to different storage space occupied by an idle-state gate control list and a running-state gate control list, and the idle-state gate control list and the running-state gate control list do not need to occupy same storage space. In such a 1+1 manner, gate control slot storage space is configured for two gate control lists (including a running-state gate control list and an idle-state gate control list) of all ports, so that resources occupied by the gate control lists can be reduced (for example, when m=4, storage space is reduced by about 37.5%), to maintain dynamical gate control list switching by the target port.

With reference to the first aspect, in a possible implementation, the list switching command includes a quantity of target slots required by the target port, and the establishing a first gate control list of the target port based on an idle slot in the first slot resource block and/or an idle slot in the second slot resource block and the list switching command includes:
when the idle slot in the first slot resource block meets a first condition and/or the idle slot in the second slot resource block meets a second condition, establishing the first gate control list based on a preset list establishment policy and the quantity of target slots, where a quantity of slots included in the first gate control list is greater than or equal to the quantity of target slots.

According to the foregoing method, a condition and a list establishment policy may be preset for the TSN device, so that when switching the running-state gate control list of the target port based on a new running scenario, the TSN device may configure the idle-state gate control list by using an adapted list establishment policy based on the current scenario or a corresponding condition that the target port meets. This is convenient for the target port to switch the running-state gate control list.

With reference to the first aspect, in a possible implementation, the TSN device may establish the first gate control list based on a preset list establishment policy, the quantity of target slots, and the different conditions that are met by the idle slot in the first slot resource block and/or the idle slot in the second slot resource block.

Specifically, the following switching scenario may be included:
(1) The first condition includes: a quantity of idle slots in the first slot resource block is greater than or equal to the quantity of target slots, and the list establishment policy includes: establishing the first gate control list based on the idle slot in the first slot resource block.
(2) The first condition includes: a quantity of idle slots in the first slot resource block is less than the quantity of target slots, the second condition includes: a quantity of idle slots in the second slot resource block is greater than or equal to the quantity of target slots, and the list establishment policy includes: establishing the first gate control list based on the idle slot in the second slot resource block.
(3) There are a plurality of target ports, the list switching command further includes gate control list switching times of the plurality of target ports, the first condition includes: a quantity of idle slots in the first slot resource block is less than a sum of quantities of target slots of the plurality of target ports, and the second condition includes: a quantity of idle slots in the second slot resource block is less than a sum of quantities of target slots of the plurality of target ports.

The list establishment policy includes: when the gate control list switching times of the plurality of target ports are different, after establishing a first gate control list of a first target port in the plurality of target ports based on the gate control list switching times of the plurality of target ports and the idle slot in the second slot resource block, establishing a first gate control list of a second target port, where a gate control list switching time of the first target port is earlier than a gate control list switching time of the second target port.

The list establishment policy may further include: when the gate control list switching times of the plurality of target ports are the same, after establishing a first part of a first gate control list of each target port based on the quantity of target slots of the plurality of target ports, establishing a second part of the first gate control list of each target port, where the first part includes a first quantity of slots in the first gate control list, the second part includes a second quantity of slots in the first gate control list, and a sum of the first quantity and the second quantity is greater than or equal to the quantity of target slots.

According to the foregoing method, the TSN device may execute a corresponding list establishment policy based on a specific switching scenario, to complete a process of switching the gate control list of the target port, and flexibly maintain a dynamical list switching process.

With reference to the first aspect, in a possible implementation, when the first gate control list is in a running state, and at least one slot included in the first gate control list includes a first slot in the second slot resource block, the method may further include:
establishing a third gate control list of the target port based on the idle slot in the first slot resource block; and
when the first gate control list is run in the first slot, switching the running-state gate control list of the target port to the third gate control list.

According to the foregoing method, the quantity of slots in the first slot resource block is greater than the quantity of slots in the second slot resource block. The TSN device monitors a slot occupied by the running-state gate control list of the target port, and runs the gate control list of the target port on the first slot resource block as much as possible, so that the slot in the second slot resource block is used as a temporary idle slot of each port of the entire TSN device, to maintain dynamical list switching by all ports of the TSN device.

It should be understood that in the foregoing process, the third gate control list may be replaced with the second gate control list, and the first gate control list may be replaced with the fourth gate control list. The fourth gate control list is a gate control list that is of the target port and that is run before the second gate control list. That is, before obtaining the current list switching command, the TSN device may further perform the following steps when the fourth gate control list of the target port is in a running state and at least one slot included in the fourth gate control list includes a second slot in the second slot resource block: establishing a second gate control list of the target port based on the idle slot in the first slot resource block; and when the fourth gate control list is run in the second slot, switching the running-state gate control list of the target port to the second gate control list. In other words, the second gate control list may be used as an idle-state gate control list established for the target port indicated by a previous list switching command of the current list switching command, so that the running-state gate control list of the target port is switched from the fourth gate control list to the second gate control list.

With reference to the first aspect, in a possible implementation, a running priority of a slot in the first slot resource block is higher than a running priority of a slot in the second slot resource block.

According to the foregoing method, there are a large quantity of slots in the first slot resource block, a high running priority may be further assigned to a slot in the first slot resource block of the TSN device, and a low running priority may be assigned to a slot in the second slot resource block of the TSN device. In this way, after obtaining the list switching command, the TSN device first establishes a link for the target port based on the idle slot in the first slot resource block, and establishes a link for the target port based on the idle slot in the second slot resource block when the idle slot in the first slot resource block is insufficient. The running-state gate control list of the target port runs in the slot in the first slot resource block as much as possible.

With reference to the first aspect, in a possible implementation, the quantity of slots in the first slot resource block is n*m*k, the quantity of slots in the second slot resource block is n*k, n, m, and k>1, n represents a quantity of ports supported by the TSN device, m represents a constant associated with a slot length, and k represents a quantity of slots included in a slot block.

According to the foregoing method, gate control slot storage space is provided for all ports based on a gate control protocol supported by the TSN device. Duration (a length of an associated slot) of each slot may be configured by a user, and a quantity of slots in a gate control list may also be configured by the user. A maximum of 128 gate control slots may be supported. This can provide a more flexible configuration method for the user, so that the user can apply a same TSN device to various service scenarios with different traffic scheduling requirements, to expand application scenarios of the TSN device.

According to a second aspect, an embodiment of this application provides an apparatus for switching a gate control list in a time-sensitive networking, which may be used in a time-sensitive networking TSN device, and may be specifically used in a gate control logic module of the TSN device. Gate control slot storage space of the TSN device includes a first slot resource block and a second slot resource block, a quantity of slots in the first slot resource block is m times a quantity of slots in the second slot resource block, and m>1. The apparatus may include:
an obtaining unit, configured to obtain a list switching command, where the list switching command indicates a target port of the TSN device to switch a running-state gate control list;
a list establishment unit, configured to establish a first gate control list of the target port based on an idle slot in the first slot resource block and/or an idle slot in the second slot resource block and the list switching command, where the first gate control list is in an idle state, and the first gate control list includes at least one slot; and
a switching unit, configured to: when a list switching condition is met, execute the list switching command to switch the running-state gate control list of the target port from a second gate control list to the first gate control list.

With reference to the second aspect, in a possible implementation, the list switching command includes a quantity of target slots required by the target port, and the list establishment unit is configured to:
when the idle slot in the first slot resource block meets a first condition and/or the idle slot in the second slot resource block meets a second condition, establish the first gate control list based on a preset list establishment policy and the quantity of target slots, where a quantity of slots included in the first gate control list is greater than or equal to the quantity of target slots.

With reference to the second aspect, in a possible implementation, the first condition includes: a quantity of idle slots in the first slot resource block is greater than or equal to the quantity of target slots; and
the list establishment policy includes: establishing the first gate control list based on the idle slot in the first slot resource block.

With reference to the second aspect, in a possible implementation, the first condition includes: a quantity of idle slots in the first slot resource block is less than the quantity of target slots, and the second condition includes: a quantity of idle slots in the second slot resource block is greater than or equal to the quantity of target slots; and
the list establishment policy includes: establishing the first gate control list based on the idle slot in the second slot resource block.

With reference to the second aspect, in a possible implementation, there are a plurality of target ports, the list switching command further includes gate control list switching times of the plurality of target ports, the first condition includes: a quantity of idle slots in the first slot resource block is less than a sum of quantities of target slots of the plurality of target ports, and the second condition includes: a quantity of idle slots in the second slot resource block is less than a sum of quantities of target slots of the plurality of target ports.

The list establishment policy includes: when the gate control list switching times of the plurality of target ports are different, after establishing a first gate control list of a first target port in the plurality of target ports based on the gate control list switching times of the plurality of target ports and the idle slot in the second slot resource block, establishing a first gate control list of a second target port, where a gate control list switching time of the first target port is earlier than a gate control list switching time of the second target port.

With reference to the second aspect, in a possible implementation, the list establishment policy further includes: when the gate control list switching times of the plurality of target ports are the same, after establishing a first part of a first gate control list of each target port based on the quantity of target slots of the plurality of target ports, establishing a second part of the first gate control list of each target port, where the first part includes a first quantity of slots in the first gate control list, the second part includes a second quantity of slots in the first gate control list, and a sum of the first quantity and the second quantity is greater than or equal to the quantity of target slots.

With reference to the second aspect, in a possible implementation, when the first gate control list is in a running state, and at least one slot included in the first gate control list includes a first slot in the second slot resource block, the list establishment unit is further configured to:
establish a third gate control list of the target port based on the idle slot in the first slot resource block; and
the switching unit is further configured to: when the first gate control list is run in the first slot, switch the running-state gate control list of the target port to the third gate control list.

With reference to the second aspect, in a possible implementation, a running priority of a slot in the first slot resource block is higher than a running priority of a slot in the second slot resource block.

With reference to the second aspect, in a possible implementation, the quantity of slots in the first slot resource block is n*m*k, the quantity of slots in the second slot resource block is n*k, n, m, and k>1, n represents a quantity of ports supported by the TSN device, m represents a constant associated with a slot length, and k represents a quantity of slots included in a slot block.

According to a third aspect, an embodiment of this application provides a time-sensitive networking device, which may include a processor, a gate control logic module, and a memory. The processor and the gate control logic module are coupled to the memory. The processor is configured to: execute a computer program or instructions stored in the memory, and send a list switching command to the gate control logic module. The gate control logic module is configured to execute the computer program or the instructions stored in the memory, so that the gate control logic module performs the method according to any one of the first aspect and the possible implementations of the first aspect.

According to a fourth aspect, an embodiment of this application provides a computer-readable storage medium, including a program or instructions. When the program or the instructions are executed, the method according to any one of the first aspect and the possible implementations of the first aspect is performed.

According to a fifth aspect, this application provides an apparatus. The apparatus has a function of implementing the TSN device in the first aspect. For example, the apparatus includes a module, a unit, or a means (means) corresponding to the steps performed by the TSN device in the first aspect. The function, the unit, or the means (means) may be implemented by software, or may be implemented by hardware, or may be implemented by hardware executing corresponding software.

According to a sixth aspect, an embodiment of this application provides a computer program product. When a computer reads and executes the computer program product, the computer is enabled to perform the method according to any one of the foregoing possible designs.

According to a seventh aspect, an embodiment of this application provides a chip, configured to read and execute a software program stored in a memory, to implement the method according to any one of the foregoing possible designs. The memory is connected to the chip, or the memory is built in the chip.

With reference to the seventh aspect, in a possible implementation, the chip further includes: a processor, configured to send a list switching command to the chip. The list switching command indicates a target port of the chip to switch a gate control list. The processor is connected to the chip, or the processor is built in the chip.

### BRIEF DESCRIPTION OF DRAWINGS

FIG. 1 is a schematic diagram of a structure of a TSN device according to an embodiment of this application;
FIG. 2 is a schematic diagram of gate control slot storage space of a TSN device according to an embodiment of this application;
FIG. 3 is a schematic diagram of a gate control list in a running state according to an embodiment of this application;
FIG. 4 is a schematic diagram of a switching principle in a switching scenario according to an embodiment of this application;
FIG. 5 is a schematic diagram of a switching principle in another switching scenario according to an embodiment of this application;
FIG. 6 is a schematic diagram of a switching principle in another switching scenario according to an embodiment of this application;
FIG. 7 is a schematic diagram of a switching principle in another switching scenario according to an embodiment of this application;
FIG. 8 is a schematic flowchart of a switching method according to an embodiment of this application;
FIG. 9 is a schematic diagram of a structure of a switching apparatus according to an embodiment of this application; and
FIG. 10 is a schematic diagram of a structure of a TSN device according to an embodiment of this application.

### DESCRIPTION OF EMBODIMENTS

The following first describes some terms in embodiments of this application, for ease of understanding by a person skilled in the art.
(1) A gate control list is a list that records all gate control slot information of a port on a time-sensitive networking (time-sensitive-networking, TSN) device, and supports a maximum of 128 slots.

Generally, a processor of the TSN device may configure two gate control lists for one port: a running-state gate control list (a running list for short) and a newly configured idle-state gate control list (an idle list for short). As a running scenario changes, the processor configures a new gate control list based on a new scenario, and writes a new entry into the idle-state gate control list. Gate control logic of the TSN device performs switching based on a gate control list switching time configured by the processor, so that the port switches from the original running list to the idle list. After the switching is completed, the idle list is in a running state and becomes a running list. The original running list stops running and slots occupied by the list are released.

Generally, a gate control list may include a gate state and a slot. The gate state may reflect a gate control switch state of a slot. The TSN device may schedule transmission of a data frame (that is, gate control on a data stream) based on gate states in different slots. When a gate state is open (open), a data frame is allowed to be transmitted. When a gate state is close (close), a data frame cannot be transmitted.

(2) A slot resource block is a storage resource provided by a memory of a TSN device, and is a general term of gate control slot storage space configured for implementing a gate control operation. Measured by a slot block, a slot resource block includes several slot blocks, and each slot block may include k slots. For example, k may be 32.

In embodiments of this application, all ports of the TSN device may share the gate control slot storage space. The gate control slot storage space may be divided into two parts, which are represented as a first slot resource block and a second slot resource block. Configuration rules of the first slot resource block and the second slot resource block meet the following content:
a. A slot in the first slot resource block preferentially runs a gate control list, and the second slot resource block is used to configure an idle list of a port when idle slots in the first slot resource block are insufficient.
b. The slots included in the first slot resource block may exactly provide storage space of one gate control list for each port of the TSN device.
c. To reduce resources occupied by two gate control lists of each port of the TSN device, a quantity of slots in the first slot resource block is configured to be greater than a quantity of slots in the second slot resource block. For example, the quantity of slots in the first slot resource block is m times the quantity of slots in the second slot resource block, where m is greater than 1. Therefore, the gate control slot storage space of the TSN device is reduced from 1+1 to 1+1/m, and this can save storage space for the TSN device.

Embodiments of this application provide a method and an apparatus for switching a gate control list in time-sensitive networking (time-sensitive-networking, TSN), to help reduce resources occupied by gate control lists of the TSN device and maintain dynamical list switching by a port of the TSN device. The method and the device are based on a same technical concept. Because problem resolving principles of the method and the device are similar, for implementation of the device and the method, refer to each other, and repeated parts are not described again.

It should be understood that, in the following embodiments, "and/or" describes an association relationship between associated objects and represents that three relationships may exist. For example, A and/or B may represent the following cases: Only A exists, both A and B exist, and only B exists, where A and B may be singular or plural. The character "/" generally indicates that the related objects before and after are in an "or" relationship. At least one of the following items (pieces) or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural. The singular expression forms "one", "a", "the", "the foregoing", "this", and "the one" are also intended to include an expression form such as "one or more", unless the opposite is explicitly indicated in the context thereof. In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first gate control list and a second gate control list are merely intended to distinguish different gate control lists, but do not indicate two gate control lists have different priorities or different importance.

Referring to "an embodiment", "some embodiments", or the like in the specification of this application means that one or more embodiments of this application include a specific feature, structure, or characteristic described with reference to the embodiment. Therefore, in this specification, statements such as "in an embodiment", "in some embodiments", "in some other embodiments", and "in other embodiments" that appear at different places do not necessarily mean a same embodiment, but mean "one or more but not all of the embodiments", unless otherwise specified. The terms "include", "comprise", "have", and variants of the terms all mean "include but are not limited to", unless otherwise specifically emphasized.

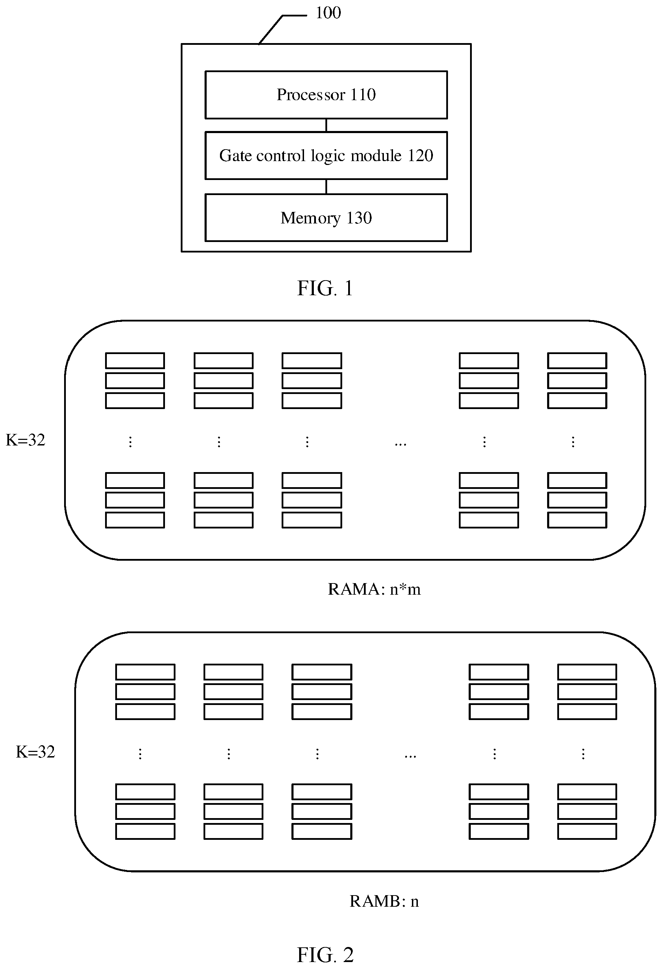

FIG. 1 is a schematic diagram of a structure of a TSN device according to an embodiment of this application. The TSN device is a device that is sensitive to a non-fixed latency and jitter, and includes but is not limited to a device such as a switch or a vehicle-mounted gateway chip. The TSN device supports the IEEE802.1Qbv standard protocol and the extended protocol, and implements gate control on a data stream by performing gate control operations on a plurality of ports, to reduce a non-fixed latency and jitter of the data stream.

As shown in FIG. 1, the TSN device 100 may include a processor 110, a gate control logic module 120, and a memory 130.

The processor 110 is usually a central processing unit (central processing unit, CPU), serves as an operation and control core of the TSN device 100, and is a final execution unit of information processing and program running. When a running scenario changes, the processor 110 needs to configure a new gate control list for the new scenario, that is, write the gate control list. In this case, the processor 110 delivers a list switching command to the gate control logic module 120. The list switching command may indicate an identifier of a target port whose running-state gate control list needs to be switched, and slot information required by the new gate control list that needs to be established for the target port, for example, a quantity of target slots, a target slot length, a target gate state, and a target gate control list switching time. It should be understood that, in this embodiment of this application, information included in the list switching command is merely an example for description rather than a limitation. In another embodiment, the list switching command may alternatively include other information. Details are not described herein.

A logic program used to implement a gate control operation specified in the protocol may be configured in the gate control logic module 120, or the logic program may be configured in the memory, and the gate control logic module 120 may run the logic program.

When receiving the list switching command from the processor 110, the gate control logic module 120 performs, based on the related slot information indicated by the list switching command, a process of establishing an idle-state gate control list (also referred to as link establishment) for the target port. The process may be specifically as follows: The gate control logic module 120 applies to gate control slot storage space of the memory 130 for an idle slot block, links the applied slot blocks to form an idle slot linked list, and writes slot information into the linked slot blocks, to obtain the new gate control list of the target port. The new gate control list is in an idle state and includes at least one slot, and is a gate control list that the target port is to switch to and run. For ease of differentiation, in this embodiment of this application, the new gate control list of the target port is referred to as a first gate control list.

A current running-state gate control list of the target port is a second gate control list, and the second gate control list includes at least one slot. When a list switching condition is met, the gate control logic module 120 may switch a running-state gate control list of the target port from the second gate control list to the first gate control list, to further implement, based on the first gate control list, a gate control operation on a data stream passing through the target port.

FIG. 2 is a schematic diagram of the gate control slot storage space of the TSN device according to an embodiment of this application. All ports of the TSN device may share the gate control slot storage space. The gate control slot storage space may be divided into two parts: a first slot resource block and a second slot resource block. A quantity of slots in the first slot resource block is greater than a quantity of slots in the second slot resource block.

As shown in FIG. 2, the gate control slot storage space of the TSN device may be, for example, random access memory (Random Access Memory, RAM) space, the first slot resource block may be represented as RAMA, and the second slot resource block may be represented as RAMB. n represents a quantity of ports (Port number, Port_num for short) supported by the TSN device, m represents a constant associated with a slot length, and k represents a quantity of slots (for example, k=32, that is, each slot block includes 32 slots) included in a slot block (as shown in a rectangular box in the figure). The quantity of slots in the first slot resource block may be n*m*k, and the quantity of slots in the second slot resource block may be n*k, where n, m, and k>1. In other words, the quantity of slots in the first slot resource block is m times the quantity of slots in the second slot resource block. For example, a value of m may be 4.

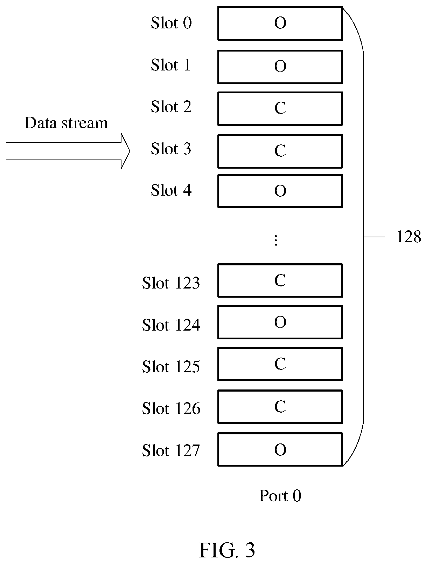

The gate control logic module 120 may establish and run a gate control list for the target port based on a slot in the first slot resource block and/or a slot in the second slot resource block, to implement a gate control operation. As shown in FIG. 3, for example, a port 0 (Port0) is used as the target port. In a running-state gate control list (a total of 128 slots are occupied, and a slot in the first slot resource block and/or a slot in the second slot resource block may be occupied) of the port 0, O indicates that a gate state of a slot is open (open), and C indicates that a gate state of a slot is close (close). The gate control logic module 120 performs a gate control operation on the port 0 based on the gate control list. When a data stream (including several data frames) arrives at an egress port scheduler (Egress Port Scheduler, EPS) of the TSN device in a slot (time) 3, the gate control list shows that the slot time3 is in a closed state. In this case, the data stream cannot be scheduled in the slot time3 that is currently in the closed state, and can be scheduled only in a slot time4 (an open state). In this way, the TSN device schedules the data stream at a fixed time, to reduce a non-fixed latency and jitter of the data stream. After running in a slot time127 ends, the gate control list returns to a slot time0.

In this embodiment of this application, duration (an associated slot length) of each slot may be configured by a user, and a quantity of slots in a gate control list may also be configured by the user. A maximum of 128 gate control slots may be supported. A running priority of a slot in the first slot resource block is higher than a running priority of a slot in the second slot resource block. After receiving the list switching command from the processor 110, the gate control logic module 120 preferentially applies to the first slot resource block RAMA for an idle slot. When a quantity of idle slots in the first slot resource block is insufficient to establish the first gate control list for the target port or is insufficient to establish the complete first gate control list for the target port, the gate control logic module 120 applies to the second slot resource block RAMB for an idle slot, and uses an idle slot in the second slot resource block as a temporary idle slot of the first slot resource block. Temporarily running the first gate control list of the target port in the idle slot in the second slot resource block, to maintain dynamical list switching by the target port. When the first slot resource block has an idle slot, the gate control logic module 120 performs switching to the first slot resource block for running the gate control list of the target port.

In this process, based on a first condition that an idle slot in the first slot resource block meets and/or a second condition that an idle slot in the second slot resource block meets, the gate control logic module 120 may establish an idle-state gate control list for the target port based on a preset list establishment policy and the quantity of target slots.

This embodiment of this application mainly relates to four switching scenarios. The logic program run by the gate control logic module 120 may establish an idle-state gate control list for the target port in the four switching scenarios, to implement a switching process of the running-state gate control list of the target port. The following describes in detail four main switching scenarios in this embodiment of this application.

### Example (1): a scenario in which idle slots in the first slot resource block are sufficient

In this scenario, the first condition includes: a quantity of idle slots in the first slot resource block RAMA is greater than or equal to a quantity of target slots required by the target port. The list establishment policy includes: establishing the first gate control list based on the idle slot in the first slot resource block RAMA.

That is, the first slot resource block RAMA currently has sufficient idle slots, and can support running of the first gate control list of the target port. In this case, the gate control logic module 120 may establish the first gate control list for the target port based on the idle slot in the first slot resource block. After the list switching condition is met, the gate control logic module 120 may switch the running-state gate control list of the target port from the second gate control list to the first gate control list, and release the previously running second gate control list, to complete list switching.

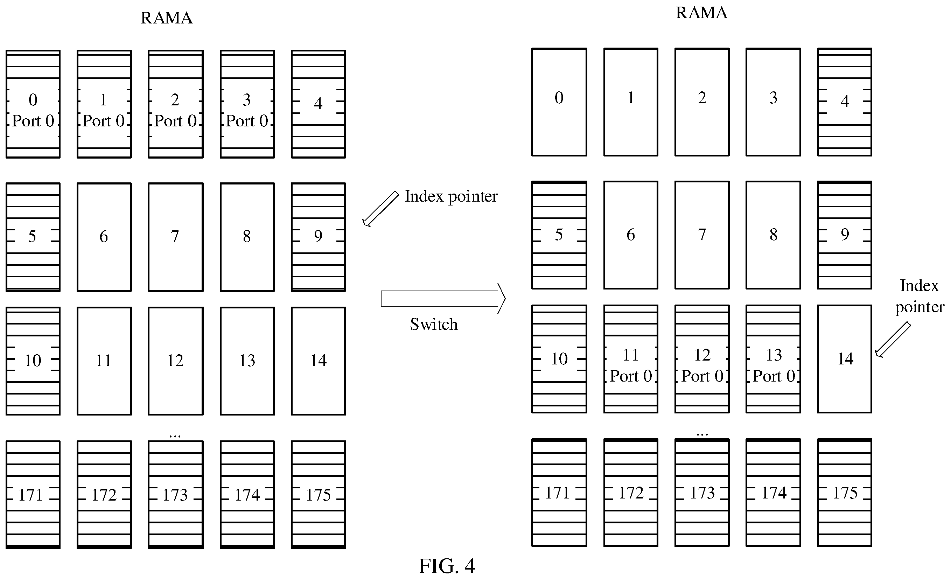

As shown in FIG. 4, a rectangular box filled with lines represents an occupied slot block in the RAMA, and a blank rectangular box represents an idle slot block in the RAMA (indicating that the slot block is not occupied by a gate control list of a port). Each slot block includes k=32 slots. A port 0 represents the target port, a running-state second gate control list of the port 0 is represented as RAMA 0->1->2->3, and currently runs in slot blocks 0 to 3 of the RAMA. Other slot blocks 4, 5, 9, 10, 171 to 175, and the like of the RAMA are occupied by other ports of the TSN device. Idle slot blocks at a current moment include 6 to 8, 11 to 14, and the like. In the RAMA, a link is established based on an index pointer, and the index pointer is located in the slot block 9 at a previous index end moment, and backward indexing needs to be performed from the slot block 9.

When the list switching command from the processor 110 indicates that the quantity of target slots of the target port port 0 is 90, the gate control logic module 120 needs to apply to the RAMA for three idle slot blocks (including a quantity of slots: 32+32+32=96, which is greater than 90) to establish a link for the target port port 0. Idle slot blocks in the RAMA are sufficient. Therefore, in this case, the gate control logic module 120 may continue to perform backward indexing based on a current position in which the index pointer of the RAMA is located, and perform backward indexing from the slot block 9, to apply for three idle slot blocks after the slot block 9 for the target port port 0, for example, slot blocks whose index numbers are 11, 12, and 13 shown in the figure. A link establishment result of the slot blocks may be represented as: RAMA 11->12->13. In addition, the index pointer points to the slot block 14.

After link establishment is completed, the gate control logic module 120 may write slot information of the new first gate control list into a corresponding slot linked list, to obtain the first gate control list, and wait for list switching. When the list switching condition is met, the running-state gate control list of the target port port 0 is switched from the second gate control list RAMA 0->1->2->3 to the first gate control list RAMA 11->12->13, and the slot blocks 0, 1, 2, and 3 occupied by the second gate control list are released, to complete switching.

It should be noted that, in this embodiment of this application, that the switching condition is met may be for example, running of the second gate control list ends, or a gate control list switching time arrives. A switching occasion of a gate control list is not limited in this embodiment of this application. In the first slot resource block or the second slot resource block of the gate control slot storage space, a link establishment manner is not limited to an index pointer manner. This is not limited in this embodiment of this application. Details are not described in other scenarios below.

### Example (2): A scenario in which idle slots in the first slot resource block are insufficient and idle slots in the second slot resource block are sufficient

In this scenario, the first condition includes: a quantity of idle lots in the first slot resource block is less than the target quantity of slots, and the second condition includes: a quantity of idle slots in the second slot resource block is greater than or equal to the quantity of target slots required by the target port. The list establishment policy includes: establishing the first gate control list based on an idle slot in the second slot resource block.

In other words, current idle slot blocks in the first slot resource block RAMA are insufficient, and cannot support running of the first gate control list of the target port. In this case, the gate control logic module 120 may run, in the idle slot in the second slot resource block, the first gate control list established for the target port. After the list switching condition is met, the gate control logic module 120 may switch the running-state module list of the target port from the second gate control list to the first gate control list, and release slots occupied by the second gate control list. Because the idle slots are released in the first slot resource block, the gate control logic module 120 may further establish a third gate control list of the target port based on the idle slot in the first slot resource block RAMA, write slot information of the first gate control list running on the second slot resource block RAMB into a slot block corresponding to the third gate control list, switch from the first gate control list to the third gate control list after running of the first gate control list ends, and release slots occupied by the first gate control list, to complete switching.

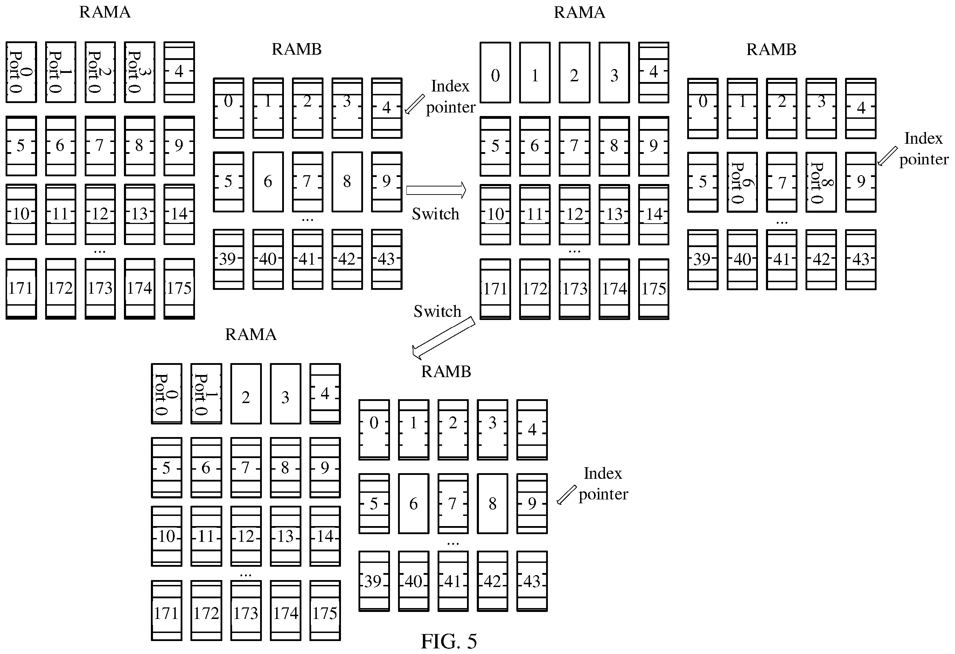

As shown in FIG. 5, a rectangular box filled with lines represents an occupied slot block in the RAMA and the RAMB, and a blank rectangular box represents an idle slot block in the RAMA and the RAMB (indicating that the slot block is not occupied by a gate control list of a port). Each slot block includes k=32 slots. The port 0 represents the target port, the second gate control list (that is, an old gate control list) of the port 0 is represented as RAMA 0->1->2->3, and currently runs on slot blocks 0 to 3 of the RAMA, and other slot blocks 4 to 175 of the RAMA are occupied by other ports of the TSN device. Currently, the RAMA does not have sufficient storage space for the target port port 0 to establish a link, and a link needs to be established in the RAMB. Index numbers of idle slot blocks in the RAMB are 6 and 8. In the RAMB, a link is established based on an index pointer. The index pointer is located in a slot block 4 at a previous index end moment, and backward indexing needs to be performed from the slot block 4.

When the list switching command from the processor 110 indicates that the quantity of target slots of the target port port 0 is 50, the gate control logic module 120 needs to apply to the RAMB for two idle slot blocks (including a quantity of slots: 32+32=64, which is greater than 50) to establish a link for the target port port 0. Idle slot blocks in the RAMB are sufficient. Therefore, in this case, the gate control logic module 120 may continue to perform backward indexing based on a current position in which the index pointer of the RAMB is located, and perform backward indexing from the slot block 4, to apply for two idle slot blocks after the slot block 4 for the target port port 0, for example, slot blocks whose index numbers are 6 and 8 shown in the figure. A link establishment result of the slot blocks may be represented as: 6->8. In addition, the index pointer points to the slot block 9. After link establishment is completed, the gate control logic module 120 may write slot information of the new first gate control list into a corresponding slot linked list, to obtain the first gate control list, and wait for list switching.

When the list switching condition is met, the gate control logic module 120 executes the list switching command, so that the running-state gate control list of the target port port 0 is switched from the second gate control list RAMA 0->1->2->3 to the first gate control list RAMB 6->8, and release the slot blocks 0, 1, 2, and 3 occupied by the second gate control list in the RAMA. Then, the gate control logic module 120 establishes a third gate control list RAMA 0->1 in the RAMA based on the idle slot blocks 0, 1, 2, and 3, writes the slot information of the first gate control list in the RAMB into the RAMA, switches from RAMB 6->8 to RAMA 0->1 for running after running of the first gate control list RAMB 6->8 ends, and releases the slot blocks RAMB 6 and RAMB 8 occupied by the first gate control list RAMB 6->8.

### Example (3): A scenario in which idle slots in the first slot resource block are insufficient, idle slots in the second slot resource block are insufficient, and gate control list switching times of a plurality of target ports are different

In this scenario, the list switching command indicates a plurality of target ports, and the list switching command further indicates different gate control list switching times of the different target ports.

The first condition includes: a quantity of idle slots in the first slot resource block is less than a sum of quantities of target slots of the plurality of target ports; and a second condition includes: a quantity of idle slots in the second slot resource block is less than a sum of quantities of target slots of the plurality of target ports. The list establishment policy includes: after a first gate control list of a first target port in the plurality of target ports is established based on the gate control list switching times of the plurality of target ports and based on an idle slot in the second slot resource block, establishing a first gate control list of a second target port. A gate control list switching time of the first target port is earlier than a gate control list switching time of the second target port.

That is, neither the first slot resource block nor the second slot resource block currently has sufficient idle slot blocks, and cannot support running of the first gate control lists of the plurality of target ports. In this case, the gate control logic module 120 establishes the first gate control list of each of the plurality of target ports in a time segment based on the gate control list switching time of the plurality of target ports and the idle slot in the second slot resource block.

The process may specifically include: based on a sequence of gate control list switching times of the plurality of target ports, the gate control logic module 120 may first establish, based on the idle slot in the second slot resource block, the first gate control list of the first target port whose gate control list switching time is earlier. When the running-state gate control list of the first target port is switched to the first gate control list of the first target port, running of the second gate control list of the first target port ends and an idle slot block is released. Further, the gate control logic module 120 establishes the first gate control list for the second target port based on the newly released idle slot block. After the running-state gate control list of the second target port is switched to the first gate control list of the second target port, when running of the second gate control list of the second target port ends and an idle slot block is released, a third gate control list may be further established for the first target port based on the released idle slot block, so that the gate control list of the first target port is switched back to the first slot resource block for running, and a slot occupied by the first gate control list of the first target port in the second slot resource block is released.

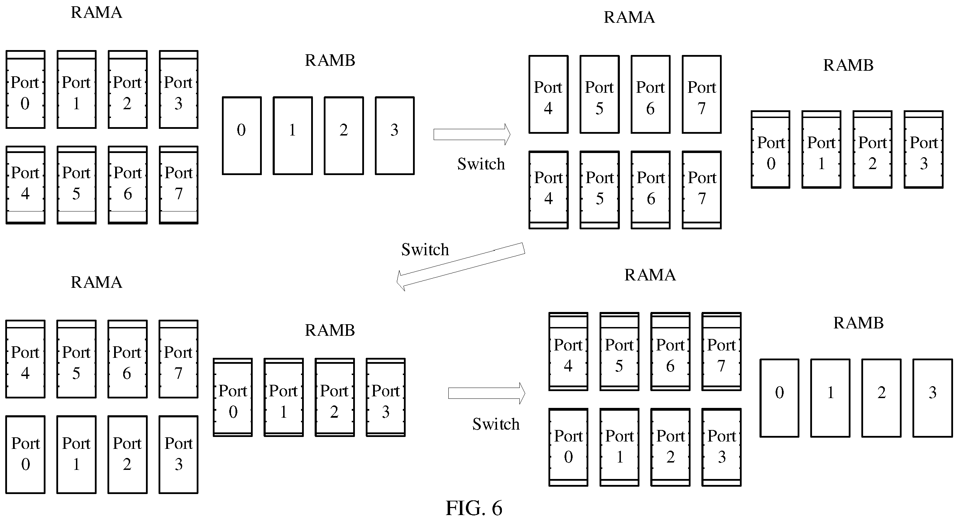

As shown in FIG. 6, rectangular boxes filled with lines represent occupied slot blocks in the RAMA and the RAMB, and blank rectangular boxes represent idle slot blocks in the RAMA and the RAMB (indicating that a slot block is not occupied by a gate control list of a port). One slot block simply represents a RAMA slot block/RAMB slot block occupied by a second gate control list of a target port, and port 0, port 1, port 2, port 3, port 4, port 5, port 6, and port 7 represent a plurality of target ports, second gate control lists of the ports 0 to 7 each currently run on slot blocks 0 to 7 in the RAMA.

Because there is no sufficient idle slot block in the RAMB to run first gate control lists of the port 0 to the port 7, the processor 110 needs to establish, based on gate control list switching times of the plurality of target ports port 0 to port 7, new idle-state gate control lists for target ports whose running-state gate control lists need to be first switched, and write slot information of the new gate control lists.

For example, in FIG. 6, it is assumed that the gate control list switching times of the port 0 to the port 3 are earlier time 10, and the gate control list switching times of the port 4 to the port 7 are later time 20. The processor 110 and the gate control logic module 120 may switch the running-state gate control lists for the plurality of target ports port 0 to port 7 based on time segments by using the following steps:
(1) The processor 110 delivers a list switching command to the gate control logic module 120, to indicate the gate control list switching times time10 and time20 of the port 0 to the port 7. The gate control logic module 120 first establishes first gate control lists for the port 0 to the port 3 based on idle slot blocks 0 to 3 in the second slot resource block RAMB according to the time10 and time20, and writes slot information of the first gate control lists of the port 0 to the port 3 to the idle slot blocks 0 to 3.
(2) When running of the second gate control lists of the port 0 to the port 3 in the RAMA ends, the port 0 to the port 3 respectively switch from the second gate control lists RAMA 0, RAMA 1, RAMA 2, and RAMA 3 of the port 0 to the port 3 to the first gate control lists RAMB 0, RAMB 1, RAMB 2, and RAMB 3 of the port 0 to the port 3 for running, and RAMA 0, RAMA 1, RAMA 2, and RAMA 3 are released. In this case, the gate control logic module 120 establishes first gate control lists for the port 4 to the port 7 based on the idle resource blocks RAMA 0, RAMA 1, RAMA 2, and RAMA 3 in the RAMA, and writes slot information of the first gate control lists of the port 4 to the port 7 into the RAMA 0, RAMA 1, RAMA 2, and RAMA 3.
(3) When running of the second gate control lists of the Port 4 to the Port 7 in the RAMA ends, the Port 4 to the Port 7 respectively switch from the second gate control lists RAMA 4, RAMA 5, RAMA 6, and RAMA 7 of the Port 4 to the Port 7 to the first gate control lists RAMA 0, RAMA 1, RAMA 2, and RAMA 3 of the Port 4 to the Port 7 for running, and the RAMA 4, RAMA 5, RAMA 6, and RAMA 7 are released. In this case, the gate control logic module 120 establishes third gate control lists for the port 0 to the port 3 based on the idle resource blocks RAMA 4, RAMA 5, RAMA 6, and RAMA 7 in the RAMA, and writes slot information of the third gate control lists of the port 0 to the port 3 into the RAMA 4, RAMA 5, RAMA 6, and RAMA 7.
(4) When running of the first gate control lists of the port 0 to the port 3 in the RAMB ends, the port 0 to the port 3 respectively switches from the first gate control lists RAMB 0, RAMB 1, RAMB 2, and RAMB 3 to the third gate control lists RAMA 4, RAMA 5, RAMA 6, and RAMA 7, and the RAMB 0, RAMB 1, RAMB 2, and RAMB 3 are released.

At this point, switching of the gate control lists is completed for the port 0 to the port 7 based on time segments.

It should be noted that, in a scenario in which the gate control list switching times of the plurality of target ports are different in Example (3), the processor 110 may indicate the gate control list switching times of the plurality of target ports at the same time by using a same list switching command, or by using at least two list switching commands. Each list switching command indicates to switch running-state gate control lists of several target ports whose gate control list switching times are the same in the plurality of target ports. Further, the gate control logic module 120 responds to the at least two list switching commands, to implement list switching of the plurality of target ports. A specific implementation of a list switching command in this scenario is not limited in this embodiment of this application.

### Example (4): A scenario in which idle slots in the first slot resource block are insufficient, idle slots in the second slot resource block are insufficient, and gate control list switching times of a plurality of target ports are the same

In this scenario, the list switching command indicates a plurality of target ports, and the list switching command further indicates that gate control list switching times of the plurality of target ports are the same.

The first condition includes: a quantity of idle slots in the first slot resource block is less than a sum of quantities of target slots of the plurality of target ports; and a second condition includes: a quantity of idle slots in the second slot resource block is less than a sum of quantities of target slots of the plurality of target ports. The list establishment policy includes: after a first part of a first gate control list of each target port is established based on an idle slot in the second slot resource block, establishing a second part of the first gate control list of each target port. The first part includes a first quantity of slots in the first gate control list, the second part includes a second quantity of slots in the first gate control list, and a sum of the first quantity and the second quantity is greater than or equal to the quantity of target slots.

That is, neither the first slot resource block nor the second slot resource block currently has sufficient idle slot blocks, and cannot support simultaneous running of the first gate control lists of the plurality of target ports. In this case, the gate control logic module 120 establishes the first part of the first gate control lists of the plurality of target ports based on the idle slot in the second slot resource block, and then establishes the second parts of the first gate control lists of the plurality of target ports after an idle slot is released from the first slot resource block or the second slot resource block.

The gate control logic module 120 first writes slot information of the first part of the first gate control list that is first established for each target port into an idle slot block in the second slot resource block, to complete pre-switching. Further, after the switching starts, the gate control logic module 120 switches running-state gate control lists of the plurality of target ports from second gate control lists of the plurality of target ports to the first parts of the first gate control lists of the plurality of target ports for running in the RAMB, and releases slots occupied by the second gate control lists of the plurality of target ports in the first slot resource block.

Further, the gate control logic module 120 establishes links for the plurality of target ports in the first slot resource block based on a quantity of actual idle slots in the first slot resource block, and writes slot information of the second parts of the first gate control lists of the plurality of target ports into the idle slots in the first slot resource block. When running of the first parts of the first gate control lists of the plurality of target ports in the RAMB ends, the second parts of the first gate control lists of the plurality of target ports are switched to the RAMA for running.

Further, the gate control logic module 120 writes, into the idle slot in the first slot resource block, slot information of the first parts that are of the first gate control lists of the plurality of target ports and that run in the second slot resource block, to complement the first gate control list. Then, after running of the first parts of the first gate control lists of the plurality of target ports in the RAMB ends, slots occupied by the first parts in the RAMB are released.

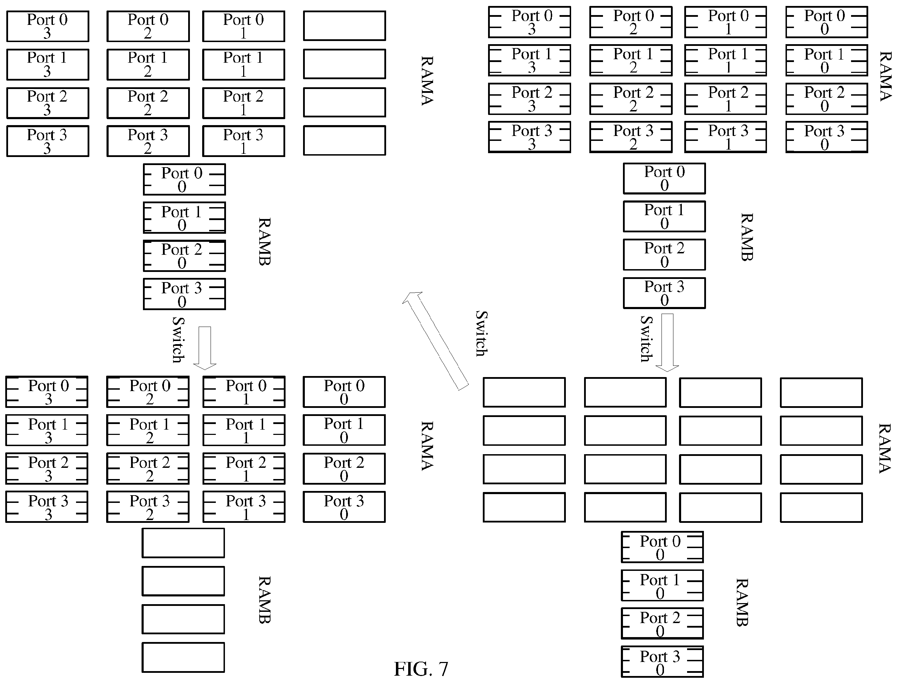

As shown in FIG. 7, rectangular boxes filled with lines represent occupied slot blocks in the RAMA and the RAMB, blank rectangular boxes represent idle slot blocks in the RAMA and the RAMB (indicating that a slot block is not occupied by a gate control list of a port), and one slot block represents 32 slots. It is assumed that m=4. Running-state gate control lists (that is, the second gate control list) of all target ports port 0, port 1, port 2, and port 3 occupy 128 slots, which are represented as port 0 0-3, port 1 0-3, port 2 0-3, and port 4 0-3. An idle-state gate control list also needs to occupy 128 slots, and the running-state gate control lists of the port 0, the port 1, the port 2, and the port 3 need to be switched at a same gate control list switching time. The processor 110 and the gate control logic module 120 may switch the running-state gate control lists for the plurality of target ports port 0 to port 3 in batches by using the following steps:
(1) The processor 110 delivers a list switching command to the gate control logic module 120, to indicate that the gate control list switching time of the port 0 to the port 3 is time10 and a quantity of target slots is 128. The gate control logic module 120 first establishes first parts of the first gate control lists for the port 0 to the port 3 based on the gate control list switching time and the quantity of target slots of the port 0 to the port 3 and idle slot blocks 0 to 3 in the second slot resource block RAMB, and writes slot information of the first parts of the first gate control lists of the port 0 to the port 3 into the idle slot blocks 0 to 3 of the RAMB, to complete pre-switching. The first part of the first gate control list of each target port includes a first quantity of slots (for example, 32), and occupies a first slot block in the RAMB. The first parts of the first gate control lists of all the target ports port 0 to port 3 occupy all storage space of the RAMB, that is, 32*4=128.
(2) When list switching starts, the running-state gate control lists of the target ports port 0 to port 3 are switched from the second gate control lists to the first gate control lists of the target ports port 0 to port 3, and the first parts (for example, the first 32 slots of each target port) of the first gate control lists of the target ports port 0 to port 3 are run in the RAMB. The second gate control lists of the port 0 to the port 3 are invalid, and slots occupied by the second gate control lists in the RAMA are released.
(3) The gate control logic module 120 establishes the second parts of the first gate control lists of the port 0 to the port 3 based on the idle slot blocks in the RAMA. For example, each of the first gate control lists of the port 0 to the port 3 requires 128 slots. The gate control logic module 120 applies to the RAMA for four slot blocks for the port 0 to the port 3, and writes slot information of the second parts of the first gate control lists of the port 0 to the port 3 (that is, remaining 96 slots of the first gate control list of each target port) into a linked list of idle slot blocks that are applied for and established in the RAMA. The second part of the first gate control list of each target port includes a second quantity of slots (for example, 96), and occupies a second slot block of the RAMA. The second parts of the first gate control lists of all the target ports port 0 to port 3 do not occupy all storage space of the RAMA.
(4) After running of the first parts of the first gate control lists of the target ports port 0 to the port 3 in the RAMB ends, the target ports port 0 to the port 3 switch to the RAMA to run the second parts of the first gate control lists. In this case, the gate control logic module 120 writes, into the RAMA, the slot information of the first part of the first gate control list that runs in the RAMB, to complement the first gate control list in the RAMA. Then, slots occupied by the first part of the first gate control list of each target port in the RAMB are released.

In this way, simultaneous switching of the gate control list of the plurality of target ports port 0 to port 3 is implemented.

In this way, an establishment manner and a switching manner of a gate control list of a port of the TSN device are controlled, the TSN device may configure gate control slot storage space for all ports in a 1+1/m manner for gate control operations, and does not need to configure gate control slot storage space for two gate control lists (including a running-state gate control list and an idle-state gate control list) of each port in a 1+1 manner. This reduces resources occupied by gate control lists (for example, when m=4, about 37.5% of storage space is reduced).

List switching policies corresponding to different scenarios in a list switching mechanism of the TSN device in this embodiment of this application are described in detail by using Example (1) to Example (4). In the switching mechanism, dynamically switching a running-state gate control list by a port of the TSN device can be maintained in reduced gate control slot storage space, to ensure service continuity of the TSN device. In addition, a data stream can be scheduled at a fixed time, to reduce a non-fixed delay and jitter of the data stream. In this solution, a configurable slot duration, a configurable quantity of slots in a gate control list, and the like may further provide a more flexible configuration manner for a user, so that the user can apply a same TSN device to various service scenarios with different traffic scheduling requirements, to expand an application scenario of the TSN device.

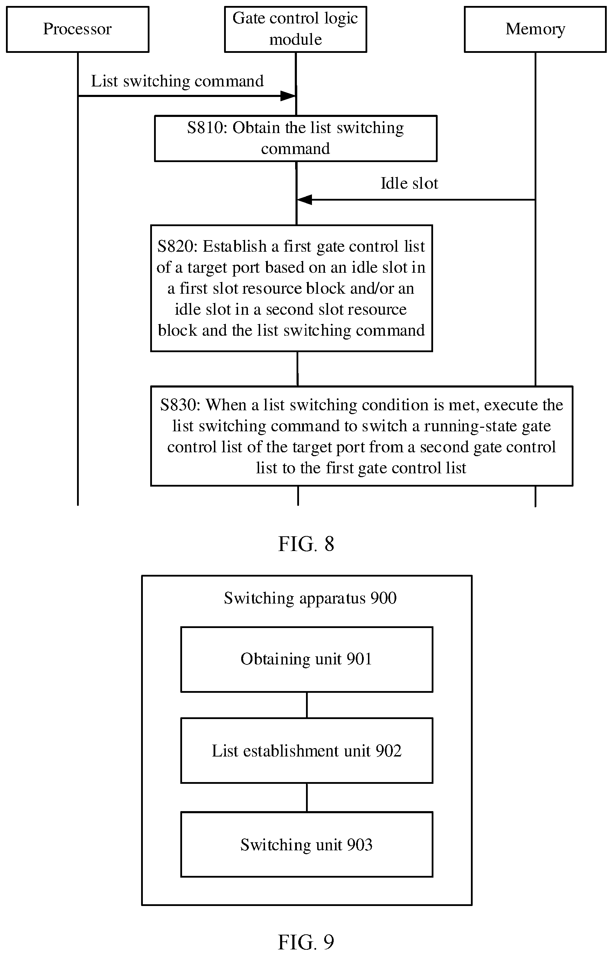

Based on the switching scenarios, an embodiment of this application provides a method for switching a gate control list in a TSN network. The method may be implemented by the processor, the gate control logic module, and the memory in the TSN device shown in FIG. 1. FIG. 8 is a schematic flowchart of a switching method according to an embodiment of this application. As shown in FIG. 8, the switching method may include the following steps.

S810: The gate control logic module obtains a list switching command.

In this embodiment of this application, the list switching command may be from the processor of the TSN device, and the list switching command may indicate a target port of the TSN device to switch a running-state gate control list.

In an optional implementation, the list switching command may indicate an identifier of the target port and slot information required a new gate control list (for example, a first gate control list) that needs to be established for the target port, for example, a quantity of target slots, a target slot length, a target gate state, and a target gate control list switching time.

It may be understood that one list switching command may indicate one or more target ports. When one list switching command indicates a plurality of target ports, slot information of the plurality of target ports may be the same or may be different. This is not limited in this embodiment of this application. For details, refer to the foregoing detailed description with reference to Example (1) to Example (4). Details are not described herein again.

S820: The gate control logic module establishes the first gate control list of the target port based on an idle slot in the first slot resource block and/or an idle slot in the second slot resource block and the list switching command.

In this embodiment of this application, the first gate control list is a new gate control list to which the target port needs to perform gate control list switching. The first gate control list is in an idle state, and the first gate control list may include at least one slot. The gate control logic module may apply, in response to the list switching command, to gate control slot storage space of the memory for one or more slot blocks required by the first gate control list, and link the applied slot blocks based on index numbers of the slot blocks, to complete a link establishment process of the first gate control list. Then, the slot information of the target port is written into each idle slot associated with the first gate control list.

The list switching command may indicate information such as the quantity of target slots, the target slot length, and the target gate control list switching time of the first gate control list of the target port. The gate control logic module may establish the first gate control list for the target port according to a preset list establishment policy based on various information indicated by the list switching command and a condition that is met by the idle slot in the first slot resource block and/or the idle slot in the second slot resource block. For a detailed implementation process, refer to the detailed description with reference to Example (1) to Example (4). Details are not described herein again.

S830: When a list switching condition is met, the gate control logic module executes the list switching command to switch the running-state gate control list of the target port from a second gate control list to the first gate control list.

In this embodiment of this application, the list switching condition is a condition that needs to be met by the target port to trigger switching from the running-state gate control list to the idle-state gate control list. Generally, the list switching condition may be that running of the second gate control list currently in a running state ends. In another optional implementation, the list switching condition may be that a gate control list switching time of the target port is reached. A switching occasion of the gate control list of the target port is not limited in this embodiment of this application.

It should be noted that, in this embodiment of this application, the second gate control list is a gate control list that is of the target port and that runs first, the first gate control list is a gate control list that is of the target port and that runs after the second gate control list, and the running-state gate control list of the target port is switched to the first gate control list for running after running of the second gate control list runs.

When establishing a link for the first gate control list, the gate control logic module establishes a link based on several idle slot blocks, to obtain a slot linked list of the first gate control list, and then writes the slot information of the target port into each idle slot in the slot linked list. After the first gate control list is switched to the running state, the gate control logic module performs gate control on a data stream based on an index number, a gate state, a slot length, and the like of a slot block occupied by the first gate control list, to implement traffic scheduling.

In S830, the second gate control list is originally in the running state and includes at least one slot. When the list switching condition is met, switching is performed, and the running-state gate control list of the target port is switched from the second gate control list to the first gate control list. For a detailed implementation process, refer to the detailed description in Example (1) to Example (4). Details are not described herein again.

It should be noted that, in this embodiment of this application, a running priority of a slot in the first slot resource block is higher than a running priority of a slot in the second slot resource block. If the first gate control list is in the running state, and the at least one slot included in the first gate control list includes a first slot in the second slot resource block, the slot that is in the second slot resource block and that is occupied by the first gate control list further needs to be switched to a slot in the first slot resource block. That is, the running-state gate control list of the target port occupies a slot in the first slot resource block as much as possible, and an idle slot in the second slot resource block temporarily runs the running-state gate control list of the target port only when idle slots in the first slot resource block are insufficient. When the first slot resource block has an idle slot, the running-state gate control list still needs to be switched back to the idle slot in the first slot resource block. Therefore, the switching method in this embodiment of this application may further include the following steps (not shown in the figure).

S841: The gate control logic module establishes a third gate control list of the target port based on the idle slot in the first slot resource block.

S842: When the first gate control list is run in the first slot, the gate control logic module switches the running-state gate control list of the target port to the third gate control list.

For a detailed implementation process, refer to the detailed description with reference to Example (2), Example (3), or Example (4). Details are not described herein again.

An embodiment of this application further provides an apparatus for switching a gate control list in time-sensitive networking. The switching apparatus may be the gate control logic module shown in FIG. 1. The processor and the gate control logic module are coupled to the memory. The processor is configured to: execute a computer program or instructions stored in the memory, and send a list switching command to the gate control logic module. The gate control logic module is configured to execute the computer program or the instructions stored in the memory, so that the gate control logic module performs the method in the foregoing embodiment.

As shown in FIG. 9, the switching apparatus 900 may include: an obtaining unit 901, configured to obtain the list switching command, where the list switching command indicates a target port of the TSN device to switch a running-state gate control list; a list establishment unit 902, configured to establish a first gate control list of the target port based on an idle slot in the first slot resource block and/or an idle slot in the second slot resource block and the list switching command; and a switching unit 903, configured to: when a list switching condition is met, execute the list switching command to switch the running-state gate control list of the target port from a second gate control list to the first gate control list. For implementation details, refer to the foregoing related descriptions. Details are not described herein again.

It should be noted that, in embodiments of this application, module division is an example, is merely logical function division, and may be other division during actual implementation. In addition, function modules in embodiments of this application may be integrated into one processor, or each of the modules may exist alone physically, or two or more modules may be integrated into one module. The integrated module may be implemented in a form of hardware, or may be implemented in a form of a software functional module.

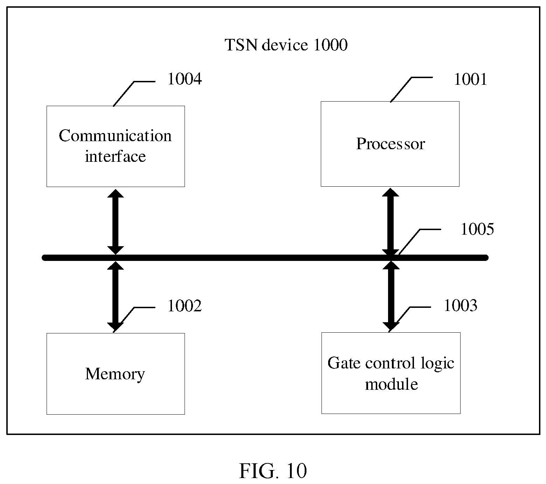

When the integrated apparatus may be implemented in the form of hardware, as shown in FIG. 10, a TSN device 1000 may include a processor 1001, a memory 1002, a gate control logic module 1003, a communication interface 1004, and a bus 1005. Hardware of an entity corresponding to the switching apparatus may be the gate control logic module 1003. The processor 1001 may be a central processing module (central processing unit, CPU), a digital processing module, or the like. The memory 1002 is configured to: store a program executed by the processor 1001, provide storage space of a gate control logic module for the gate control logic module 1003, and the like. The memory 1002 may be a non-volatile memory, for example, a hard disk drive (hard disk drive, HDD) or a solid-state drive (solid-state drive, SSD), or may be a volatile memory (volatile memory), for example, a random access memory (random-access memory, RAM), or at least two of the foregoing memories. The memory 1002 is any other medium that can be used to carry or store expected program code in a form of instructions or a data structure and that can be accessed by a computer, but is not limited thereto. The processor 1001 may obtain, through the communication interface 1004, data collected by a sensor, data collected by a camera, and the like, to generate the list switching command.

In an implementation, the gate control logic module 1003 may be configured to execute the program code stored in the memory 1002, and is specifically configured to perform the method described in the foregoing embodiment. For details, refer to the method described above with reference to the embodiments shown in FIG. 2 to FIG. 10. Details are not described herein again in this application.

In this embodiment of this application, a specific connection medium between the processor 1001, the memory 1002, the gate control logic module 1003, and the communication interface 1004 is not limited. In this embodiment of this application, the processor 1001, the memory 1002, the gate control logic module 1003, and the communication interface 1004 are connected through the bus 1005 in FIG. 10. The bus is represented by a bold line in FIG. 10. A connection manner between other components is merely an example for description, and is not limited thereto. The bus may be classified into an address bus, a data bus, a control bus, and the like. For ease of representation, only one thick line is used to represent the bus in FIG. 10, but this does not mean that there is only one bus or only one type of bus.

An embodiment of the present invention further provides a computer-readable storage medium, configured to store computer software instructions that need to be executed by the foregoing processor, and the computer-readable storage medium includes a program that needs to be executed by the foregoing processor.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the apparatus (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing apparatus to generate a machine, so that the instructions executed by a computer or a processor of any other programmable data processing apparatus generate an apparatus for implementing a specific function in one or more processes in the flowcharts and/or in one or more blocks in the block diagrams.

These computer program instructions may also be stored in a computer-readable memory that can instruct the computer or any other programmable data processing apparatus to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may also be loaded onto a computer or another programmable data processing apparatus, so that a series of operations and steps are performed on the computer or the another programmable apparatus, to generate computer-implemented processing. Therefore, the instructions executed on the computer or the another programmable apparatus provide steps for implementing a specific function in one or more processes in the flowcharts and/or in one or more blocks in the block diagrams.

## Claims

1. A method for switching a gate control list in time-sensitive networking, applied to a time-sensitive networking, TSN, device, wherein gate control slot storage space of the TSN device comprises a first slot resource block and a second slot resource block, a quantity of slots in the first slot resource block is m times a quantity of slots in the second slot resource block, m>1, and the method comprises:
obtaining (S810) a list switching command, wherein the list switching command indicates a target port of the TSN device to switch a running-state gate control list;
establishing (S820) a first gate control list of the target port based on an idle slot in the first slot resource block and/or an idle slot in the second slot resource block and the list switching command, wherein the first gate control list is in an idle state, and the first gate control list comprises at least one slot; and
when (S830) a list switching condition is met, executing the list switching command to switch the running-state gate control list of the target port from a second gate control list to the first gate control list.

2. The method according to claim 1, wherein the list switching command comprises a quantity of target slots required by the target port, and the establishing a first gate control list of the target port based on an idle slot in the first slot resource block and/or an idle slot in the second slot resource block and the list switching command comprises:
when the idle slot in the first slot resource block meets a first condition and/or the idle slot in the second slot resource block meets a second condition, establishing the first gate control list based on a preset list establishment policy and the quantity of target slots, wherein a quantity of slots comprised in the first gate control list is greater than or equal to the quantity of target slots.

3. The method according to claim 2, wherein the first condition comprises: a quantity of idle slots in the first slot resource block is greater than or equal to the quantity of target slots; and
the list establishment policy comprises: establishing the first gate control list based on the idle slot in the first slot resource block.

4. The method according to claim 2, wherein the first condition comprises: a quantity of idle slots in the first slot resource block is less than the quantity of target slots, and the second condition comprises: a quantity of idle slots in the second slot resource block is greater than or equal to the quantity of target slots; and
the list establishment policy comprises: establishing the first gate control list based on the idle slot in the second slot resource block.

5. The method according to claim 2, wherein there are a plurality of target ports, the list switching command further comprises gate control list switching times of the plurality of target ports, the first condition comprises: a quantity of idle slots in the first slot resource block is less than a sum of quantities of target slots of the plurality of target ports, and the second condition comprises: a quantity of idle slots in the second slot resource block is less than a sum of quantities of target slots of the plurality of target ports; and
the list establishment policy comprises: when the gate control list switching times of the plurality of target ports are different, after a first gate control list of a first target port in the plurality of target ports is established based on the gate control list switching times of the plurality of target ports and the idle slot in the second slot resource block, establishing a first gate control list of a second target port, wherein a gate control list switching time of the first target port is earlier than a gate control list switching time of the second target port.

6. The method according to claim 5, wherein the list establishment policy further comprises: when the gate control list switching times of the plurality of target ports are the same, after a first part of a first gate control list of each target port is established based on the quantity of target slots of the plurality of target ports, establishing a second part of the first gate control list of each target port, wherein the first part comprises a first quantity of slots in the first gate control list, the second part comprises a second quantity of slots in the first gate control list, and a sum of the first quantity and the second quantity is greater than or equal to the quantity of target slots.

7. The method according to any one of claims 1 to 6, wherein when the first gate control list is in a running state, and at least one slot comprised in the first gate control list comprises a first slot in the second slot resource block, the method further comprises:
establishing a third gate control list of the target port based on the idle slot in the first slot resource block; and
when the first gate control list is run in the first slot, switching the running-state gate control list of the target port to the third gate control list.

8. The method according to any one of claims 1 to 7, wherein a running priority of a slot in the first slot resource block is higher than a running priority of a slot in the second slot resource block.

9. An apparatus for switching a gate control list in time-sensitive networking, applied to a time-sensitive networking TSN device, wherein gate control slot storage space of the TSN device comprises a first slot resource block and a second slot resource block, a quantity of slots in the first slot resource block is m times a quantity of slots in the second slot resource block, m>1, and the apparatus comprises:
an obtaining unit, configured to obtain a list switching command, wherein the list switching command indicates a target port of the TSN device to switch a running-state gate control list;
a list establishment unit, configured to establish a first gate control list of the target port based on an idle slot in the first slot resource block and/or an idle slot in the second slot resource block and the list switching command, wherein the first gate control list is in an idle state, and the first gate control list comprises at least one slot; and
a switching unit, configured to: when a list switching condition is met, execute the list switching command to switch the running-state gate control list of the target port from a second gate control list to the first gate control list.

10. The apparatus according to claim 9, wherein the list switching command comprises a quantity of target slots required by the target port, and the list establishment unit is configured to:
when the idle slot in the first slot resource block meets a first condition and/or the idle slot in the second slot resource block meets a second condition, establish the first gate control list based on a preset list establishment policy and the quantity of target slots, wherein a quantity of slots comprised in the first gate control list is greater than or equal to the quantity of target slots.

11. The apparatus according to claim 10, wherein the first condition comprises: a quantity of idle slots in the first slot resource block is greater than or equal to the quantity of target slots; and
the list establishment policy comprises: establishing the first gate control list based on the idle slot in the first slot resource block.

12. The apparatus according to claim 10, wherein the first condition comprises: a quantity of idle slots in the first slot resource block is less than the quantity of target slots, and the second condition comprises: a quantity of idle slots in the second slot resource block is greater than or equal to the quantity of target slots; and
the list establishment policy comprises: establishing the first gate control list based on the idle slot in the second slot resource block.

13. The apparatus according to claim 10, wherein there are a plurality of target ports, the list switching command further comprises gate control list switching times of the plurality of target ports, the first condition comprises: a quantity of idle slots in the first slot resource block is less than a sum of quantities of target slots of the plurality of target ports, and the second condition comprises: a quantity of idle slots in the second slot resource block is less than a sum of quantities of target slots of the plurality of target ports; and
the list establishment policy comprises: when the gate control list switching times of the plurality of target ports are different, establishing a first gate control list of a second target port after establishing a first gate control list of a first target port in the plurality of target ports based on the gate control list switching times of the plurality of target ports and based on the idle slot in the second slot resource block, wherein a gate control list switching time of the first target port is earlier than a gate control list switching time of the second target port.

14. A computer program, comprising instructions which, when the program is executed by a computer, cause the computer to carry out the method of any one of the claims 1 to 8.

15. A computer-readable storage medium, comprising a program or instructions, wherein when the program or the instructions are executed, the method according to any one of claims 1 to 8 is performed.

## Patentansprüche

1. Verfahren zum Umschalten einer Gate-Steuerliste in zeitempfindlicher Vernetzung, das auf eine zeitempfindliche Vernetzungseinrichtung, TSN-Einrichtung, angewandt wird, wobei ein Gate-Steuerschlitzspeicherraum der TSN-Einrichtung einen ersten Schlitzressourcenblock und einen zweiten Schlitzressourcenblock umfasst, eine Anzahl an Schlitzen in dem ersten Schlitzressourcenblock m-mal eine Anzahl an Schlitzen in dem zweiten Schlitzressourcenblock beträgt, m>1 und das Verfahren Folgendes umfasst:
Erlangen (S810) eines Listenumschaltbefehls, wobei der Listenumschaltbefehl einen Zielanschluss der TSN-Einrichtung angibt, um eine Gate-Steuerliste in einem laufenden Zustand umzuschalten;
Erstellen (S820) einer ersten Gate-Steuerliste des Zielanschlusses basierend auf einem Leerlaufschlitz in dem ersten Schlitzressourcenblock und/oder einem Leerlaufschlitz in dem zweiten Schlitzressourcenblock und dem Listenumschaltbefehl, wobei sich die erste Gate-Steuerliste in einem Leerlaufzustand befindet und die erste Gate-Steuerliste mindestens einen Schlitz umfasst; und
wenn (S830) eine Listenumschaltbedingung erfüllt ist, Ausführen des Listenumschaltbefehls, um die Gate-Steuerliste in dem laufenden Zustand des Zielanschlusses von einer zweiten Gate-Steuerliste auf die erste Gate-Steuerliste umzuschalten.

2. Verfahren nach Anspruch 1, wobei der Listenumschaltbefehl eine Anzahl an Zielschlitzen umfasst, die durch den Zielanschluss erfordert wird, und das Erstellen einer ersten Gate-Steuerliste des Zielanschlusses basierend auf einem Leerlaufschlitz in dem ersten Schlitzressourcenblock und/oder einem Leerlaufschlitz in dem zweiten Schlitzressourcenblock und dem Listenumschaltbefehl Folgendes umfasst:
wenn der Leerlaufschlitz in dem ersten Schlitzressourcenblock eine erste Bedingung erfüllt und/oder der Leerlaufschlitz in dem zweiten Schlitzressourcenblock eine zweite Bedingung erfüllt, Erstellen der ersten Gate-Steuerliste basierend auf einer voreingestellten Listenerstellungsrichtlinie und der Anzahl an Zielschlitzen, wobei eine Anzahl an Schlitzen, die in der ersten Gate-Steuerliste umfasst ist, größer als oder gleich der Anzahl an Zielschlitzen ist.

3. Verfahren nach Anspruch 2, wobei die erste Bedingung Folgendes umfasst: eine Anzahl an Leerlaufschlitzen in dem ersten Schlitzressourcenblock ist größer als oder gleich der Anzahl an Zielschlitzen; und
die Listenerstellungsrichtlinie Folgendes umfasst: Erstellen der ersten Gate-Steuerliste basierend auf dem Leerlaufschlitz in dem ersten Schlitzressourcenblock.

4. Verfahren nach Anspruch 2, wobei die erste Bedingung Folgendes umfasst: eine Anzahl an Leerlaufschlitzen in dem ersten Schlitzressourcenblock ist kleiner als die Anzahl an Zielschlitzen, und die zweite Bedingung Folgendes umfasst: eine Anzahl an Leerlaufschlitzen in dem zweiten Schlitzressourcenblock ist größer als oder gleich der Anzahl an Zielschlitzen; und
die Listenerstellungsrichtlinie Folgendes umfasst: Erstellen der ersten Gate-Steuerliste basierend auf dem Leerlaufschlitz in dem zweiten Schlitzressourcenblock.

5. Verfahren nach Anspruch 2, wobei es eine Vielzahl von Zielanschlüssen gibt, der Listenumschaltbefehl ferner Gate-Steuerlistenumschaltzeiten der Vielzahl von Zielanschlüssen umfasst, die erste Bedingung Folgendes umfasst: eine Anzahl an Leerlaufschlitzen in dem ersten Schlitzressourcenblock ist kleiner als eine Summe von Anzahlen an Zielschlitzen der Vielzahl von Zielanschlüssen, und die zweite Bedingung Folgendes umfasst: eine Anzahl an Leerlaufschlitzen in dem zweiten Schlitzressourcenblock ist kleiner als eine Summe von Anzahlen an Zielschlitzen der Vielzahl von Zielanschlüssen; und
die Listenerstellungsrichtlinie Folgendes umfasst: wenn sich die Gate-Steuerlistenumschaltzeiten der Vielzahl von Zielanschlüssen unterscheiden, nachdem eine erste Gate-Steuerliste eines ersten Zielanschlusses in der Vielzahl von Zielanschlüssen basierend auf den Gate-Steuerlistenumschaltzeiten der Vielzahl von Zielanschlüssen und dem Leerlaufschlitz in dem zweiten Schlitzressourcenblock erstellt wurde, Erstellen einer ersten Gate-Steuerliste eines zweiten Zielanschlusses, wobei eine Gate-Steuerlistenumschaltzeit des ersten Zielanschlusses früher als eine Gate-Steuerlistenumschaltzeit des zweiten Zielanschlusses ist.

6. Verfahren nach Anspruch 5, wobei die Listenerstellungsrichtlinie ferner Folgendes umfasst: wenn die Gate-Steuerlistenumschaltzeiten der Vielzahl von Zielanschlüssen die gleichen sind, nachdem ein erster Teil einer ersten Gate-Steuerliste jedes Zielanschlusses basierend auf der Anzahl an Zielanschlüssen der Vielzahl von Zielanschlüssen erstellt wurde, Erstellen eines zweiten Teiles der ersten Gate-Steuerliste jedes Zielanschlusses, wobei der erste Teil eine erste Anzahl an Schlitzen in der ersten Gate-Steuerliste umfasst, der zweite Teil eine zweite Anzahl an Schlitzen in der ersten Gate-Steuerliste umfasst und eine Summe der ersten Anzahl und der zweiten Anzahl größer als oder gleich der Anzahl an Zielschlitzen ist.

7. Verfahren nach einem der Ansprüche 1 bis 6, wobei das Verfahren, wenn sich die erste Gate-Steuerliste in einem laufenden Zustand befindet und mindestens ein Schlitz, der in der ersten Gate-Steuerliste umfasst ist, einen ersten Schlitz in dem zweiten Schlitzressourcenblock umfasst, Folgendes umfasst:
Erstellen einer dritten Gate-Steuerliste des Zielanschlusses basierend auf dem Leerlaufschlitz in dem ersten Schlitzressourcenblock; und
wenn die erste Gate-Steuerliste in dem ersten Schlitz läuft, Umschalten der Gate-Steuerliste in dem laufenden Zustand des Zielanschlusses auf die dritte Gate-Steuerliste.

8. Verfahren nach einem der Ansprüche 1 bis 7, wobei eine Laufpriorität eines Schlitzes in dem ersten Schlitzressourcenblock höher als eine Laufpriorität eines Schlitzes in dem zweiten Schlitzressourcenblock ist.

9. Vorrichtung zum Umschalten einer Gate-Steuerliste in zeitempfindlicher Vernetzung, die auf eine zeitempfindliche Vernetzungseinrichtung, TSN-Einrichtung, angewandt wird, wobei ein Gate-Steuerschlitzspeicherraum der TSN-Einrichtung einen ersten Schlitzressourcenblock und einen zweiten Schlitzressourcenblock umfasst, eine Anzahl an Schlitzen in dem ersten Schlitzressourcenblock m-mal eine Anzahl an Schlitzen in dem zweiten Schlitzressourcenblock beträgt, m>1 und die Vorrichtung Folgendes umfasst:
eine Erlangungseinheit, die dazu konfiguriert ist, einen Listenumschaltbefehl zu erlangen, wobei der Listenumschaltbefehl einen Zielanschluss der TSN-Einrichtung angibt, um eine Gate-Steuerliste in einem laufenden Zustand umzuschalten;
eine Listenerstellungseinheit, die dazu konfiguriert ist, eine erste Gate-Steuerliste des Zielanschlusses basierend auf einem Leerlaufschlitz in dem ersten Schlitzressourcenblock und/oder einem Leerlaufschlitz in dem zweiten Schlitzressourcenblock und dem Listenumschaltbefehl zu erstellen, wobei sich die erste Gate-Steuerliste in einem Leerlaufzustand befindet und die erste Gate-Steuerliste mindestens einen Schlitz umfasst; und
eine Umschalteinheit, die zu Folgendem konfiguriert ist: wenn eine Listenumschaltbedingung erfüllt ist, Ausführen des Listenumschaltbefehls, um die Gate-Steuerliste in dem laufenden Zustand des Zielanschlusses von einer zweiten Gate-Steuerliste auf die erste Gate-Steuerliste umzuschalten.

10. Vorrichtung nach Anspruch 9, wobei der Listenumschaltbefehl eine Anzahl an Zielschlitzen umfasst, die durch den Zielanschluss erfordert wird, und die Listenerstellungseinheit zu Folgendem konfiguriert ist:
wenn der Leerlaufschlitz in dem ersten Schlitzressourcenblock eine erste Bedingung erfüllt und/oder der Leerlaufschlitz in dem zweiten Schlitzressourcenblock eine zweite Bedingung erfüllt, Erstellen der ersten Gate-Steuerliste basierend auf einer voreingestellten Listenerstellungsrichtlinie und der Anzahl an Zielschlitzen, wobei eine Anzahl an Schlitzen, die in der ersten Gate-Steuerliste umfasst ist, größer als oder gleich der Anzahl an Zielschlitzen ist.

11. Vorrichtung nach Anspruch 10, wobei die erste Bedingung Folgendes umfasst: eine Anzahl an Leerlaufschlitzen in dem ersten Schlitzressourcenblock ist größer als oder gleich der Anzahl an Zielschlitzen; und
die Listenerstellungsrichtlinie Folgendes umfasst: Erstellen der ersten Gate-Steuerliste basierend auf dem Leerlaufschlitz in dem ersten Schlitzressourcenblock.

12. Vorrichtung nach Anspruch 10, wobei die erste Bedingung Folgendes umfasst: eine Anzahl an Leerlaufschlitzen in dem ersten Schlitzressourcenblock ist kleiner als die Anzahl an Zielschlitzen, und die zweite Bedingung Folgendes umfasst: eine Anzahl an Leerlaufschlitzen in dem zweiten Schlitzressourcenblock ist größer als oder gleich der Anzahl an Zielschlitzen; und
die Listenerstellungsrichtlinie Folgendes umfasst: Erstellen der ersten Gate-Steuerliste basierend auf dem Leerlaufschlitz in dem zweiten Schlitzressourcenblock.

13. Vorrichtung nach Anspruch 10, wobei es eine Vielzahl von Zielanschlüssen gibt, der Listenumschaltbefehl ferner Gate-Steuerlistenumschaltzeiten der Vielzahl von Zielanschlüssen umfasst, die erste Bedingung Folgendes umfasst: eine Anzahl an Leerlaufschlitzen in dem ersten Schlitzressourcenblock ist kleiner als eine Summe von Anzahlen an Zielschlitzen der Vielzahl von Zielanschlüssen, und die zweite Bedingung Folgendes umfasst: eine Anzahl an Leerlaufschlitzen in dem zweiten Schlitzressourcenblock ist kleiner als eine Summe von Anzahlen an Zielschlitzen der Vielzahl von Zielanschlüssen; und
die Listenerstellungsrichtlinie Folgendes umfasst: wenn sich die Gate-Steuerlistenumschaltzeiten der Vielzahl von Zielanschlüssen unterscheiden, Erstellen einer ersten Gate-Steuerliste eines zweiten Zielanschlusses nach Erstellen einer ersten Gate-Steuerliste eines ersten Zielanschlusses in der Vielzahl von Zielanschlüssen basierend auf den Gate-Steuerlistenumschaltzeiten der Vielzahl von Zielanschlüssen und basierend auf dem Leerlaufschlitz in dem zweiten Schlitzressourcenblock, wobei eine Gate-Steuerlistenumschaltzeit des ersten Zielanschlusses früher als eine Gate-Steuerlistenumschaltzeit des zweiten Zielanschlusses ist.

14. Computerprogramm, umfassend Anweisungen, die, wenn das Programm durch einen Computer ausgeführt wird, den Computer dazu veranlassen, das Verfahren nach einem der Ansprüche 1 bis 8 durchzuführen.

15. Computerlesbares Speichermedium, umfassend ein Programm oder Anweisungen, wobei, wenn das Programm oder die Anweisungen ausgeführt werden, das Verfahren nach einem der Ansprüche 1 bis 8 durchgeführt wird.

## Revendications

1. Procédé de commutation d'une liste de commande de grille dans un réseautage à temps de sensibilité appliqué à un dispositif de réseautage à temps de sensibilité, TSN, dans lequel l'espace de stockage des emplacements de commande de grille du dispositif TSN comprend un premier bloc de ressources d'emplacement et un second bloc de ressources d'emplacement, une quantité d'emplacements dans le premier bloc de ressources d'emplacement est m fois une quantité d'emplacements dans le second bloc de ressources d'emplacement, m > 1, et le procédé comprend :
l'obtention (S810) d'une commande de commutation de liste, dans lequel la commande de commutation de liste indique un port cible du dispositif TSN pour commuter une liste de commande de grille en état de fonctionnement ;
l'établissement (S820) d'une première liste de commande de grille du port cible sur la base d'un emplacement inactif dans le premier bloc de ressources d'emplacement et/ou d'un emplacement inactif dans le second bloc de ressources d'emplacement et la commande de commutation de liste, dans lequel la première liste de commande de grille est dans un état inactif, et la première liste de commande de grille comprend au moins un emplacement ; et
lorsque (S830) une condition de commutation de liste est remplie, l'exécution de la commande de commutation de liste pour commuter la liste de commande de grille en état de fonctionnement du port cible depuis une deuxième liste de commande de grille vers la première liste de commande de grille.

2. Procédé selon la revendication 1, dans lequel la commande de commutation de liste comprend une quantité d'emplacements cibles requis par le port cible, et l'établissement d'une première liste de commande de grille du port cible sur la base d'un emplacement inactif dans le premier bloc de ressources d'emplacement et/ou d'un emplacement inactif dans le second bloc de ressources d'emplacement, et la commande de commutation de liste comprend :
lorsque l'emplacement inactif dans le premier bloc de ressources d'emplacement remplit une première condition et/ou que l'emplacement inactif dans le second bloc de ressources d'emplacement remplit une seconde condition, l'établissement de la première liste de commande de grille sur la base d'une politique d'établissement de liste prédéfinie et de la quantité d'emplacements cibles, dans lequel une quantité d'emplacements compris dans la première liste de commande de grille est supérieure ou égale à la quantité d'emplacements cibles.

3. Procédé selon la revendication 2, dans lequel la première condition comprend : une quantité d'emplacements inactifs dans le premier bloc de ressources d'emplacements est supérieure ou égale à la quantité d'emplacements cibles ; et
la politique d'établissement de liste comprend : l'établissement de la première liste de commande de grille sur la base de l'emplacement inactif dans le premier bloc de ressources d'emplacement.

4. Procédé selon la revendication 2, dans lequel la première condition comprend : une quantité d'emplacements inactifs dans le premier bloc de ressources d'emplacements est inférieure à la quantité d'emplacements cibles, et la seconde condition comprend :
une quantité d'emplacements inactifs dans le second bloc de ressources d'emplacements est supérieure ou égale à la quantité d'emplacements cibles ; et
la politique d'établissement de liste comprend : l'établissement de la première liste de commande de grille sur la base de l'emplacement inactif dans le second bloc de ressources d'emplacement.

5. Procédé selon la revendication 2, dans lequel il existe une pluralité de ports cibles, la commande de commutation de liste comprend en outre des temps de commutation de liste de commande de grille de la pluralité de ports cibles, la première condition comprend : une quantité d'emplacements inactifs dans le premier bloc de ressources d'emplacements est inférieure à une somme de quantités d'emplacements cibles de la pluralité de ports cibles, et la seconde condition comprend : une quantité d'emplacements inactifs dans le second bloc de ressources d'emplacements est inférieure à une somme de quantités d'emplacements cibles de la pluralité de ports cibles ; et
la politique d'établissement de liste comprend : lorsque les temps de commutation de liste de commande de grille de la pluralité de ports cibles sont différents, après l'établissement d'une première liste de commande de grille d'un premier port cible dans la pluralité de ports cibles sur la base des temps de commutation de liste de commande de grille de la pluralité de ports cibles et de l'emplacement inactif dans le second bloc de ressources d'emplacement, l'établissement d'une première liste de commande de grille d'un second port cible, dans lequel un temps de commutation de liste de commande de grille du premier port cible est antérieur à un temps de commutation de liste de commande de grille du second port cible.

6. Procédé selon la revendication 5, dans lequel la politique d'établissement de liste comprend en outre : lorsque les temps de commutation de liste de commande de grille de la pluralité de ports cibles sont identiques, après l'établissement d'une première partie d'une première liste de commande de grille de chaque port cible sur la base de la quantité d'emplacements cibles de la pluralité de ports cibles, l'établissement d'une seconde partie de la première liste de commande de grille de chaque port cible, dans lequel la première partie comprend une première quantité d'emplacements dans la première liste de commande de grille, la seconde partie comprend une seconde quantité d'emplacements dans la première liste de commande de grille, et une somme de la première quantité et de la seconde quantité est supérieure ou égale à la quantité d'emplacements cibles.

7. Procédé selon l'une quelconque des revendications 1 à 6, dans lequel, lorsque la première liste de commande de grille est en état de fonctionnement et qu'au moins un emplacement compris dans la première liste de commande de grille comprend un premier emplacement dans le second bloc de ressources d'emplacement, le procédé comprend en outre :
l'établissement d'une troisième liste de commande de grille du port cible sur la base de l'emplacement inactif dans le premier bloc de ressources d'emplacement ; et
lorsque la première liste de commande de grille est exécutée dans le premier emplacement, la commutation de la liste de commande de grille en état de fonctionnement du port cible vers la troisième liste de commande de grille.

8. Procédé selon l'une quelconque des revendications 1 à 7, dans lequel une priorité d'exécution d'un emplacement dans le premier bloc de ressources d'emplacement est supérieure à une priorité d'exécution d'un emplacement dans le second bloc de ressources d'emplacement.

9. Appareil de commutation d'une liste de commande de grille dans un réseautage à temps de sensibilité appliqué à un dispositif de réseautage à temps de sensibilité TSN, dans lequel l'espace de stockage des emplacements de commande de grille du dispositif TSN comprend un premier bloc de ressources d'emplacement et un second bloc de ressources d'emplacement, une quantité d'emplacements dans le premier bloc de ressources d'emplacement est m fois une quantité d'emplacements dans le second bloc de ressources d'emplacement, m > 1, et l'appareil comprend :
une unité d'obtention configurée pour obtenir une commande de commutation de liste, dans lequel la commande de commutation de liste indique un port cible du dispositif TSN pour commuter une liste de commande de grille en état de fonctionnement ;
une unité d'établissement de liste configurée pour établir une première liste de commande de grille du port cible sur la base d'un emplacement inactif dans le premier bloc de ressources d'emplacement et/ou d'un emplacement inactif dans le second bloc de ressources d'emplacement et la commande de commutation de liste, dans lequel la première liste de commande de grille est dans un état inactif, et la première liste de commande de grille comprend au moins un emplacement ; et
une unité de commutation configurée pour : lorsqu'une condition de commutation de liste est remplie, exécuter la commande de commutation de liste pour commuter la liste de commande de grille en état de fonctionnement du port cible depuis une deuxième liste de commande de grille vers la première liste de commande de grille.

10. Appareil selon la revendication 9, dans lequel la commande de commutation de liste comprend une quantité d'emplacements cibles requis par le port cible, et l'unité d'établissement de liste est configurée pour :
lorsque l'emplacement inactif dans le premier bloc de ressources d'emplacement remplit une première condition et/ou que l'emplacement inactif dans le second bloc de ressources d'emplacement remplit une seconde condition, établir la première liste de commande de grille sur la base d'une politique d'établissement de liste prédéfinie et de la quantité d'emplacements cibles, dans lequel une quantité d'emplacements compris dans la première liste de commande de grille est supérieure ou égale à la quantité d'emplacements cibles.

11. Appareil selon la revendication 10, dans lequel la première condition comprend : une quantité d'emplacements inactifs dans le premier bloc de ressources d'emplacements est supérieure ou égale à la quantité d'emplacements cibles ; et
la politique d'établissement de liste comprend : l'établissement de la première liste de commande de grille sur la base de l'emplacement inactif dans le premier bloc de ressources d'emplacement.

12. Appareil selon la revendication 10, dans lequel la première condition comprend : une quantité d'emplacements inactifs dans le premier bloc de ressources d'emplacements est inférieure à la quantité d'emplacements cibles, et la seconde condition comprend :
une quantité d'emplacements inactifs dans le second bloc de ressources d'emplacements est supérieure ou égale à la quantité d'emplacements cibles ; et
la politique d'établissement de liste comprend : l'établissement de la première liste de commande de grille sur la base de l'emplacement inactif dans le second bloc de ressources d'emplacement.

13. Appareil selon la revendication 10, dans lequel il existe une pluralité de ports cibles, la commande de commutation de liste comprend en outre des temps de commutation de liste de commande de grille de la pluralité de ports cibles, la première condition comprend : une quantité d'emplacements inactifs dans le premier bloc de ressources d'emplacements est inférieure à une somme de quantités d'emplacements cibles de la pluralité de ports cibles, et la seconde condition comprend : une quantité d'emplacements inactifs dans le second bloc de ressources d'emplacements est inférieure à une somme de quantités d'emplacements cibles de la pluralité de ports cibles ; et
la politique d'établissement de liste comprend : lorsque les temps de commutation de liste de commande de grille de la pluralité de ports cibles sont différents, l'établissement d'une première liste de commande de grille d'un second port cible après avoir établi une première liste de commande de grille d'un premier port cible dans la pluralité de ports cibles sur la base des temps de commutation de liste de commande de grille de la pluralité de ports cibles et sur la base de l'emplacement inactif dans le second bloc de ressources d'emplacement, dans lequel un temps de commutation de liste de commande de grille du premier port cible est antérieur à un temps de commutation de liste de commande de grille du second port cible.

14. Programme informatique comprenant des instructions qui, lorsque le programme est exécuté par un ordinateur, amènent l'ordinateur à réaliser le procédé selon l'une quelconque des revendications 1 à 8.

15. Support de stockage lisible par ordinateur, comprenant un programme ou des instructions, dans lequel lorsque le programme ou les instructions sont exécutés, le procédé selon l'une quelconque des revendications 1 à 8 est réalisé.
